# EUROPEAN PATENT APPLICATION

(11) **EP 1 197 672 A1**
(43) Date of publication of application: **17.04.2002**
(21) Application number: 01917542.1
(22) Date of filing: 28.03.2001
(51) Int. Cl.: F16D 7/10, F16F 15/133

(54) **POWER TRANSMISSION MECHANISM**

(30) Priority: 29.03.2000 JP 2000090296; 11.08.2000 JP 2000245372
(71) Applicant: Kabushiki Kaisha Toyota Jidoshokki, Kariya-shi, Aichi-ken 448-8671 (JP)
(72) Inventor: Kimura, Kazuya, K. K. Toyota Jidoshokki, Kariya-shi, Aichi 448-8671 (JP); Uryu, Akifumi, K. K. Toyota Jidoshokki, Kariya-shi, Aichi 448-8671 (JP)
(74) Representative: Leson, Thomas Johannes Alois, Dipl.-Ing.
(86) International application number: JP0102564
(87) International publication number: WO0173307

(57) **Abstract**

When power is transmitted from a pulley (32) of an engine (E) to a receiving member (35) of a compressor, a power transmitting arm (42) is elastically deformed by force generated by transmission torque. The power transmitting arm (42) thus permits an engaging recess (43) to change its position with respect to the receiving member (35). Accordingly, the pulley (32) and the receiving member (35) are permitted to rotate relative to each other in a predetermined angular range with a roller (39) sliding in the engaging recess (43) while rolling in the engaging recess (43) in a contact state.

## Description

### Technical Field

The present invention relates to power transmission mechanisms that are capable of dampening variation in transmission torque between a pair of rotary bodies.

### Background Technique

Japanese Unexamined Patent Publication No. 11-30244 discloses this type of power transmission mechanism. In the mechanism, a rotary body of an external drive source is connected to a rotary body of a certain device through an elastic member formed of, for example, rubber, such that power can be transmitted from one rotary body to the other. When the external drive source transmits power to the device, force caused by transmission torque acts to elastically deform the elastic member, thus allowing the rotary bodies to rotate relative to each other.

Thus, even though variation in the output torque of the external drive source or variation in the drive torque of another device driven by the external drive source causes variation in the transmission torque between the two rotary bodies, the variation is dampened through the relative rotation of the rotary bodies enabled by the elastic deformation of the elastic member.

However, in this conventional technique, the dampening of the variation in the transmission torque depends exclusively on the elastic deformation of the elastic member. Thus, the dampening of the variation in the transmission torque of this technique is insufficient.

### Disclosure of the Invention

It is an objective of the present invention to provide a power transmission mechanism that is capable of efficiently dampening variation in transmission torque between a pair of rotary bodies.

To achieve the above objective, a power transmission mechanism according to the present invention includes a first rotary body that has an engaging projection, a second rotary body that is located coaxial with the first rotary body and has an engaging recess, the engaging projection engaging with the engaging recess to connect the first and second rotary bodies to each other such that power transmission is permitted, at least one of the engaging projection and recess being configured to change its position with respect to the associated rotary body, and an elastic member that is elastically deformed by force generated by transmission torque for permitting at least one of the engaging projection and recess to change its position, thereby enabling the rotary bodies to rotate relative to each other in a predetermined angular range with the engaging projection sliding in the engaging recess, wherein, during the power transmission between the first and second rotary bodies. The power transmission mechanism is characterized in that the engaging projection is a rolling component rotationally supported by the first rotary body, and the rolling component slides in the engaging recess while rolling in the engaging recess in a contact state.

### Brief Description of the Drawings

Fig. 1 is a cross-sectional view showing a compressor that has a power transmission mechanism of an embodiment according to the present invention;
Fig. 2 is an enlarged view showing the vicinity of the power transmission mechanism of Fig. 1, which is a cross-sectional view taken along line A-A of Fig. 3;
Fig. 3 is a front view showing the power transmission mechanism from which a cover is removed;
Fig. 4 is a view explaining the operation of the power transmission mechanism;
Fig. 5 is a view explaining a torque limiting operation of the power transmission mechanism;
Fig. 6 is a view explaining the torque limiting operation of the power transmission mechanism;
Fig. 7 is a cross-sectional view showing a power transmission mechanism of a second embodiment according to the present invention; and
Fig. 8 is a view showing a modification of the present invention.

### Best Mode for Carrying Out the Invention

First and second embodiments, or power transmission mechanisms of the present invention that are applied to swash plate type variable displacement compressors for vehicle air conditioners, will now be described. Regarding the second embodiment, the description focuses on the difference between the first embodiment and the second embodiment. Further, same or like reference numerals are given to parts of the second embodiment that are the same as or like corresponding parts of the first embodiment, thus avoiding to repeat the description of these parts.

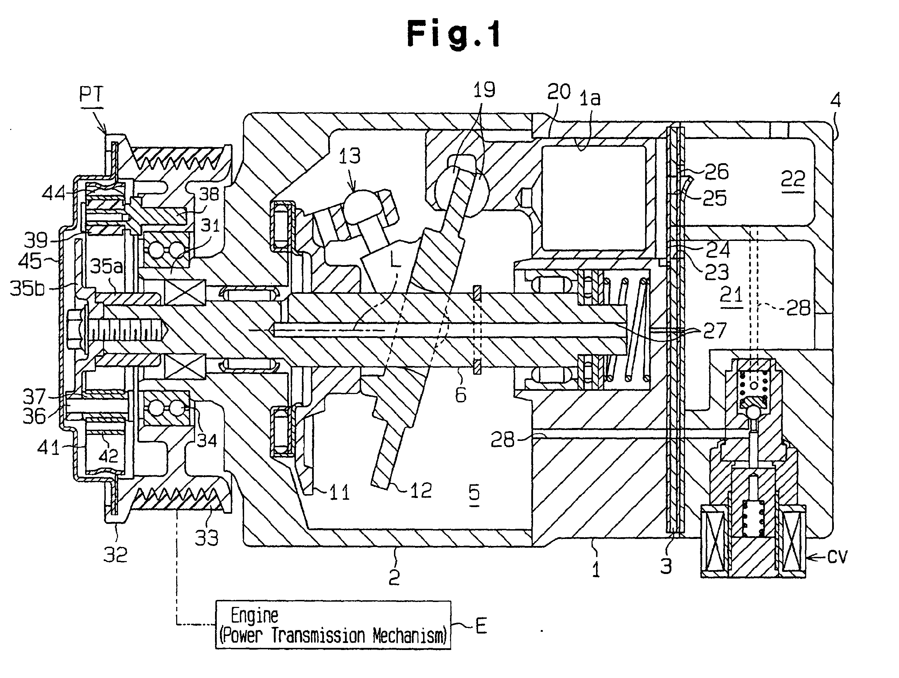

As shown in Fig. 1, the compressor includes a cylinder block 1, a front housing member 2 that is securely joined with a front end of the cylinder block 1, and a rear housing member 4 that is securely joined with a rear end of the cylinder block 1 with a valve plate 3 arranged between the cylinder block 1 and the rear housing member 4. The cylinder block 1, the front housing member 2, and the rear housing member 4 form a housing of the compressor.

A crank chamber 5 is formed in a space encompassed by the cylinder block 1 and the front housing member 2. A drive shaft 6 is rotationally supported in the crank chamber 5. In the crank chamber 5, a lug plate 11 is secured to the drive shaft 6 to rotate integrally with the drive shaft 6.

A front end of the drive shaft 6 is operationally connected to an engine E of a vehicle through a power transmission mechanism PT. The power transmission mechanism PT may be a clutch mechanism (for example, an electromagnetic clutch mechanism) that selectively transmits and blocks power in accordance with external electric controlling. Alternatively, the power transmission mechanism PT may be a constant transmitting type clutchless mechanism (for example, a belt combined with a pulley) that does not include the clutch mechanism. In the first embodiment, the power transmission mechanism PT is a clutchless type. A clutch type power transmission mechanism PT will be described in detail in the second embodiment.

The crank chamber 5 accommodates a swash plate 12. The swash plate 12 is supported to slide along the drive shaft 6 and incline with respect to the drive shaft 6. A hinge mechanism 13 is located between the lug plate 11 and the swash plate 12. Thus, due to the hinge connection between the swash plate 12 and the lug plate 11 through the hinge mechanism 13 and the supporting of the swash plate 12 by the drive shaft 6, the swash plate 12 rotates integrally with the lug plate 11 and the drive shaft 6 and inclines with respect to the drive shaft 6 while sliding along the drive shaft in the axial direction L.

A plurality of cylinder bores 1a (only one is shown in Fig. 1) are formed in the cylinder block 1 and are located around the drive shaft 6. Each cylinder bore 1a receives a single-headed piston 20 that reciprocates in the cylinder bore 1a. Front and rear openings of each cylinder bore 1a are closed by the valve plate 3 and the piston 20. A compression chamber is formed in each cylinder bore 1a. The volume of each compression chamber is varied in accordance with movement of the associated piston 20. Each piston 20 is connected to the outer periphery of the swash plate 12 through shoes 19. Thus, when the swash plate 12 rotates integrally with the drive shaft 6, the shoes 19 convert the rotation of the swash plate 12 to the movement of each piston 20.

The valve plate 3 and the rear housing member 4 form a suction chamber 21 and a discharge chamber 22. Corresponding to each cylinder bore 1a, the valve plate 3 includes an inlet port 23, an inlet valve 24 that selectively opens and closes the inlet port 23, an outlet port 25, and an output valve 26 that selectively opens and closes the output port 25. Each inlet port 23 connects the associated cylinder bore 1a to the suction chamber 21. Each outlet port 25 connects the associated cylinder bore 1a to the discharge chamber 22.

When each piston 20 moves from the top dead center to the bottom dead center, refrigerant gas flows from the suction chamber 21 to the associated cylinder bore 1a through the associated inlet port 23 opened by the inlet valve 24. When the piston 20 moves from the bottom dead center to the top dead center, the refrigerant gas is compressed to a predetermined pressure in the cylinder bore 1a and is discharged to the discharge chamber 22 through the associated outlet port 25 opened by the outlet valve 26.

In the compressor, the pressure in the crank chamber 5 is adjusted by an electromagnetic control valve CV, thus changing the inclination angle of the swash plate 12 to a certain value between a maximum value (corresponding to the state of Fig. 1) and a minimum value.

A bleeding passage 27 connects the crank chamber 5 to the suction chamber 21. A supply passage 28 connects the discharge chamber 22 to the crank chamber 5. The electromagnetic control valve CV is located in the supply passage 28. A control device (not shown) adjusts the opening size of the control valve CV to adjust the amount of the highpressure refrigerant gas that flows from the discharge chamber 22 to the crank chamber 5 through the supply passage 28. The pressure in the crank chamber 5 is determined in accordance with equilibrium between this amount and the amount of the gas that flows from the crank chamber 5 to the suction chamber 21 through the bleeding passage 27. When the pressure in the crank chamber 5 varies, the pressure difference between the crank chamber 5 and each cylinder bore 1a that acts on the associated piston 20 varies. This changes the inclination angle of the swash plate 12, thus varying the stroke of each piston 20, or the displacement of the compressor.

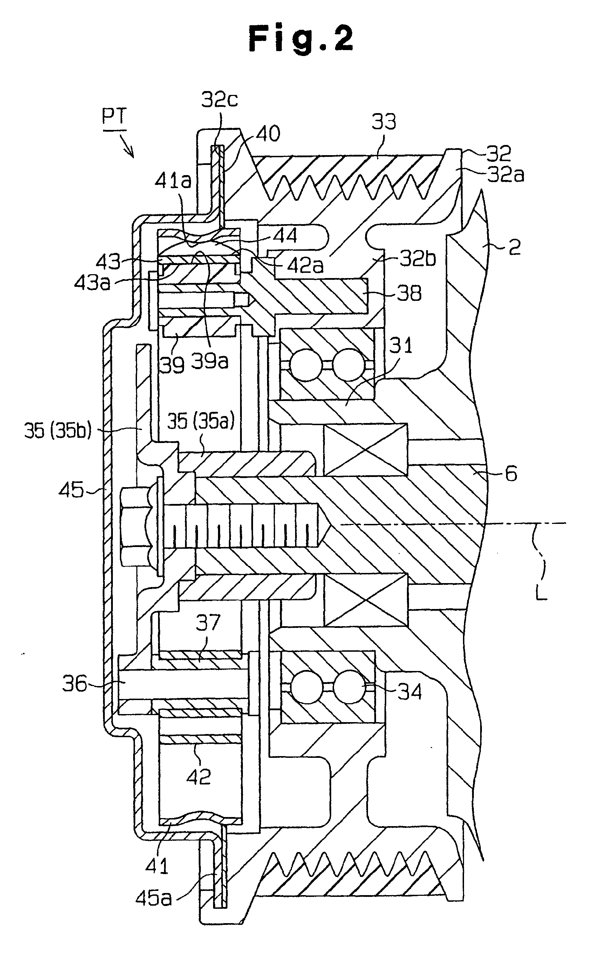

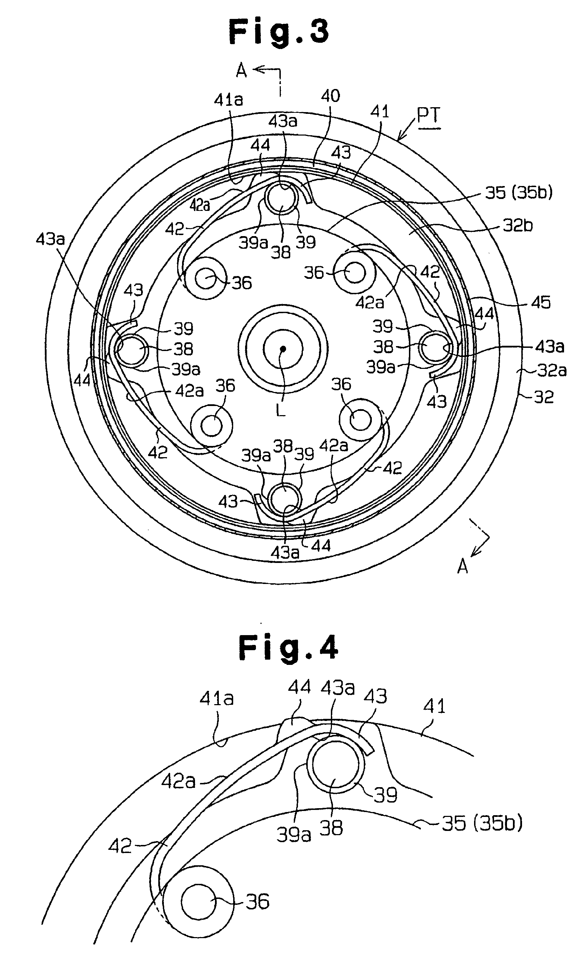

As shown in Figs. 2 and 3, a support cylinder 31 projects from an outer side of the front housing member 2 and encompasses the front end of the drive shaft 6. A pulley 32, or a first rotary body, includes a cylindrical belt receiving portion 32a and an annular support portion 32b. A belt 33 is connected to the output shaft of the engine E (see Fig. 1) and is wound around the belt receiving portion 32a. The support portion 32b projects radially inward from the inner side of the belt receiving portion 32a. The support cylinder 31 rotationally supports the pulley 32 through a bearing 34 at the support portion 32b. That is, the pulley 32 is located coaxial with the drive shaft 6 around the axis L and rotates relative to the drive shaft 6.

A receiving member 35, or a second rotary body, is secured to the front end of the drive shaft 6 and rotates integrally with the drive shaft 6. The receiving member 35 includes a cylindrical member 35a and a disk-like hub 35b. The cylindrical member 35a is securely fitted around the front end of the drive shaft 6. The hub 35b engages with the front end of the cylindrical member 35a. Although not illustrated, a structure such as a spline engagement structure and a key structure engages the drive shaft 6 with the cylindrical member 35a and the cylindrical member 35a with the hub 35b in a rotational direction of the drive shaft 6.

A plurality of (in this embodiment, four) support pins 36 are securely fitted in a rear outer circumferential portion of the hub 35b. The support pins 36 are located around the axis L at predetermined intervals (in this embodiment, 90 degrees). A cylindrical sleeve 37 is fitted around the outer side of each support pin 36 through appropriate pressure. Thus, if a relatively large rotation force acts on each sleeve 37, the sleeve 37 rotates relative to the associated support pin 36.

A plurality of (in this embodiment, four) engaging pins 38 are securely fitted in the front side of the support portion 32b of the pulley 32. The engaging pins 38 are located around the axis L at predetermined intervals (in this embodiment, 90 degrees). Each engaging pin 38 rotationally supports a cylindrical roller 39, or an engagement projection and rolling component. The rollers 39 are located radially outward from the sleeves 37 in the pulley 32. Each roller 39 may be formed of metal or resin or rubber. For example, if each roller 39 is formed of resin, it is preferred the following materials are selected in terms of anti-abrasive performance and sliding performance with respect to an engagement recess 43 (a sliding surface 43a), which will be later described. The materials include polyetheretherketone, fluorine contained resin such as polytetrafluoroethylene, phenolarakyl such as SK resin (trade name: product of SUMIKIN KAKO KABUSHIKI KAISHA), polyamideimide, polyphenylene sulfide that contains 50 weight percent of polytetrafluoroethylene, mixture of polyphenylene sulfide, polytetrafluoroethylene, and carbon fiber, polyamide such as Nylon 66, and acetal copolymers.

An annular fitting groove 32c is formed in a front inner circumferential side of the belt receiving portion 32a of the pulley 32. A flat annular engaging member 40 is securely fitted in the fitting groove 32c at an outer circumferential portion of the engaging member 40. An annular restricting ring 41 is connected to the pulley 32 through the inner periphery of the engaging member 40. The restricting ring 41 is located coaxial with the pulley 32 around the axis L and encompasses the sleeves 37 and the rollers 39. An intermediate portion of an inner circumferential side of the restricting ring 41 that opposes a cylindrical surface 39a of each roller 39 projects smoothly inward, thus forming a restricting surface 41a.

A power transmitting arm 42 is a plate spring and is located between each sleeve 37 and the corresponding roller 39. That is, a proximal portion of each power transmitting arm 42 is securely wound around the sleeve 37 of the associated support pin 36. Each power transmitting arm 42 connects each sleeve 37, which is located radially inward, to the corresponding roller 39, while forming a curve that slightly projects in a radial outward direction of the pulley 32. Each roller 39 is located radially outward from the corresponding sleeve 37 and is located offset from the sleeve 37 clockwise with respect to the axis L, as viewed in Fig. 3.

A distal portion of each power transmitting arm 42 has a section that projects radially outward from the roller 39 of the corresponding support pin 38 at a position between the roller 39 and the restricting surface 41a of the restricting ring 41, or in the pulley 32. The distal portion of each power transmitting arm 42 also has a section that is curved in a radial inward direction of the pulley 32 along the cylindrical surface 39a of the corresponding roller 39. This structure forms an engaging recess 43 near the distal end of each power transmitting arm 42 for accommodating the corresponding roller 39. In other words, each power transmitting arm 42 of the receiving member 35 engages with the corresponding roller 39 of the pulley 32 at the engaging recess 43, or through engagement between a projection and a recess. This enables power transmission between the receiving member 35 and the pulley 32. Further, the receiving member 35 is connected to the pulley 32 such that the receiving member 35 rotates relative to the pulley 32 in a predetermined angular range.

A fulcrum portion 44 is formed of, for example, rubber and is secured to an outer side 42a of each power transmitting arm 42 that faces the restricting surface 41a of the restricting ring 41, through vulcanizing adhesion. The fulcrum portion 44 of each power transmitting arm 42 is compressed between the outer side 42a of the power transmitting arm 42 and the restricting surface 41a of the restricting ring 41. The force that acts against the compression presses the power transmitting arm 42 against the corresponding roller 39. In this state, the cylindrical surface 39a of each roller 39 is pressed against the sliding surface 43a of the engaging recess 43 of the corresponding power transmitting arm 42. Each sliding surface 43a is a curved concave surface. The curvature of the cylindrical surface 39a of each roller 39 is larger than that of the sliding surface 43a of each engaging recess 43. Accordingly, each cylindrical surface 39a linearly contacts the corresponding sliding surface 43a.

Since the sliding surface 43a of each engaging recess 43 is the curved concave surface, the angle at which the sliding surface 43a inclines in a circumferential direction of the pulley 32 becomes gradually larger toward a distal end and a proximal end of the power transmitting arm 42. Thus, if each roller 39 and the corresponding power transmitting arm 42 move relative to each other in the circumferential direction of the pulley 32 from the state of Fig. 3 such that the position at which the cylindrical surface 39a contacts the sliding surface 43a shifts toward the distal or proximal end of the power transmitting arm 42, the roller 39 generates force to press the power transmitting arm 42 in a radial outward direction of the pulley 32.

A lidded cylindrical cover 45 has a flange 45a that is formed at its outer circumference. The cover 45 is securely fitted in the fitting groove 32c through the flange 45a, together with the outer circumferential portion of the engaging member 40. The cover 45 encompasses the front side of the pulley 32. The space between the cover 45 and the pulley 32 accommodates the components for the power transmission between the pulley 32 and the drive shaft 6 (such as the receiving member 35, the support pins 36, the engaging pins 38 (the rollers 39), the restricting ring 41, and the power transmitting arms 42).

The power of the engine E is transmitted to the pulley 32 through the belt 33. The power is then transmitted to the receiving member 35 through the rollers 39 of the pulley 32 and the power transmitting arms 42 engaged with the rollers 39. Thus, the power is transmitted to the drive shaft 6. The power transmission generates transmission torque between the pulley 32 of the engine E and the receiving member 35 of the compressor. The transmission torque moves the rollers 39 relative to the corresponding power transmitting arms 42 such that the pulley 32 rotates relative to the receiving member 35.

If the pulley 32 rotates clockwise as shown in Fig. 4, the transmission torque moves the receiving member 35 relative to the pulley 32, or counterclockwise. Thus, each roller 39 moves relative to the corresponding power transmitting arm 42 in the circumferential direction of the pulley 32. This shifts the position at which the cylindrical surface 39a of each roller 39 contacts the sliding surface 43a of the corresponding engaging recess 43 toward the distal end of the power transmitting arm 42. In this state, the contact position between the cylindrical surface 39a and the sliding surface 43a corresponds to a power point, and the position at which the fulcrum portion 44 abuts against the restricting surface 41a of the restricting ring 41 corresponds to a fulcrum point. Thus, a portion of the power transmitting arm 42 distal from the fulcrum portion 44 elastically deforms in the radial outward direction of the pulley 32. That is, each power transmitting arm 42 is elastically deformed by the force generated by the transmission torque, thus forming an elastic member that permits each engaging recess 43 to change its position with respect to the receiving member 35 (deformation of the sliding surface 43a).

If the compressor displacement increases, the transmission torque between the pulley 32 and the receiving member 35 becomes larger. This increases the force that acts to elastically deform the distal portion of each power transmitting arm 42 in the radial outward direction of the pulley 32. Thus, each roller 39 further elastically deforms the power transmitting arm 42 and distally moves relative to the corresponding power transmitting arm 42. Accordingly, while each roller 39 slides along the sliding surface 43a of the corresponding engaging recess 43 as rolling on the same in a contact state, the contact position between the cylindrical surface 39a of the roller 39 and the sliding surface 43a shifts toward the distal end of the power transmitting arm 42. As a result, the relative rotational angle between the pulley 32 and the receiving member 35 increases.

In contrast, if the compressor displacement decreases, the transmission torque between the pulley 32 and the receiving member 35 becomes smaller. This reduces the force that acts to elastically deform the distal portion of each power transmitting arm 42 in the radial outward direction of the pulley 32. Thus, some accumulated elastic force is released from each power transmitting arm 42 such that the corresponding roller 39 proximally moves relative to the power transmitting arm 42. Accordingly, while each roller 39 slides along the sliding surface 43a of the corresponding engaging recess 43 as rolling on the same in a contact state, the contact position between the cylindrical surface 39a of the roller 39 and the sliding surface 43a shifts toward the proximal end of the power transmitting arm 42. As a result, the relative rotational angle between the pulley 32 and the receiving member 35 decreases.

As described, as long as the load torque of the compressor does not adversely affect the engine E, or remains less than a maximum value, the contact position between the cylindrical surface 39a of each roller 39 and the sliding surface 43a of the corresponding engaging recess 43 is maintained within the sliding surface 43a. That is, each roller 39 is maintained as engaged with the corresponding engaging recess 43 such that power is continuously transmitted from the engine E to the drive shaft 6.

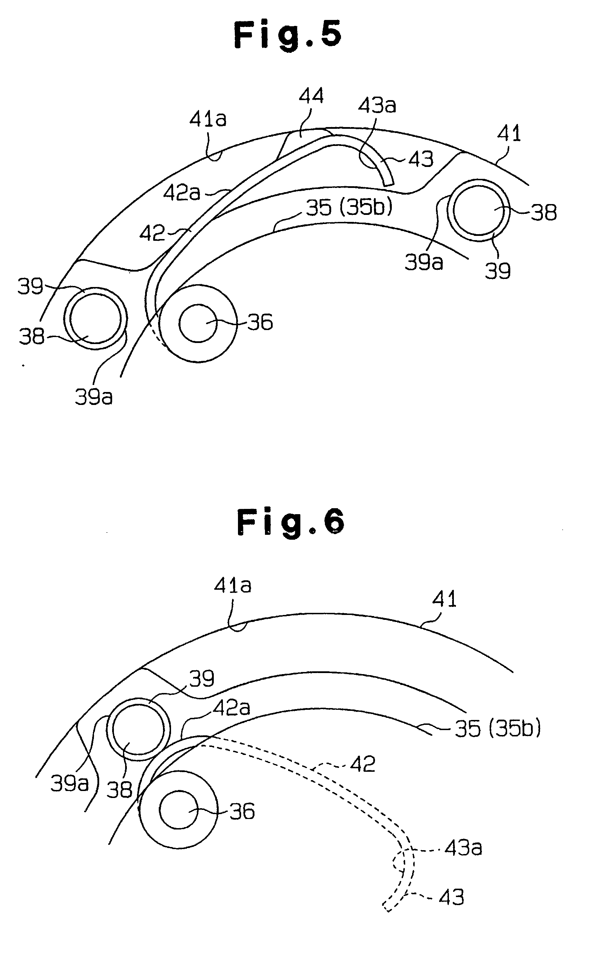

However, as shown in Fig. 5, if the load torque of the compressor becomes equal to or larger than the maximum value due to a problem (for example, deadlocking) of the compressor, the elastic force of each power transmitting arm 42 cannot hold the contact position between the cylindrical surface 39a of each roller 39 and the sliding surface 43a of the corresponding engaging recess 43 within the sliding surface 43a. Thus, each roller 39 falls from the corresponding engaging recess 43 in a distal direction of the power transmitting arm 42, or separates from the sliding surface 43a, such that the roller 39 is disengaged from the power transmitting arm 42. This blocks the power transmission from the pulley 32 to the receiving member 35. Accordingly, the engine E is prevented from being affected by the excessive load torque of the compressor.

When each roller 39 is disengaged from the corresponding power transmitting arm 42, the pulley 32 freely rotates relative to the receiving member 35. Thus, each roller 39, which is attached to the pulley 32, contacts the outer side 42a of the adjacent power transmitting arm 42 on the movement path of the roller 39, or the power transmitting arm 42 that has been located adjacent to the original power transmitting arm 42 during the power transmission. Thus, as shown in Fig. 6, the contact between each roller 39 and the outer side 42a of the corresponding power transmitting arm 42 generates force that acts to rotate the power transmitting arm 42 around the support pin 36. Accordingly, the power transmitting arm 42, together with the associated sleeve 37 that securely supports the power transmitting arm 42, rotates clockwise around the support pin 36, as viewed in the drawing. In other words, each roller 36 and the engine E, which moves the rollers 36 relative to the power transmitting arms 42 even when the power transmission is suspended, form a moving force applying means.

Accordingly, although the engaging recess 43 of each power transmitting arm 42 is located radially outward from the pulley 32 immediately after separation from the corresponding roller 39, the engaging recess 43 returns to a position near the drive shaft 6 after an about quarter cycle of rotation of the pulley 32, or once the roller 39 abuts against the adjacent power transmitting arm 42. As described, each sleeve 37 is fitted around the associated support pin 36 through appropriate pressure. Thus, if an external force (for example, force generated by vibration of the vehicle) acts on each sleeve 37, the sleeve 37 reliably holds the corresponding power transmitting arm 42 at a position retreated from the corresponding roller 39 (the state of Fig. 6). Thus, any power transmitting arm 42 does not interfere with the adjacent roller 39, which approaches the power transmitting arm 42. This prevents noise and vibration from being otherwise caused by repeated hitting of the rollers 39 and the power transmitting arms 42.

When the engine E actually drives the compressor and the output torque of the engine E or the drive torque of an auxiliary device driven by the engine E other than the compressor (for example, a hydraulic pump of a power steering device) varies, the transmission torque between the pulley 32 and the receiving member 35 also varies. In this state, the contact position between the cylindrical surface 39a of each roller 39 and the sliding surface 43a of the corresponding engaging recess 43 repeatedly shifts. That is, the pulley 32 repeatedly alternates clockwise movement and counterclockwise movement relative to the receiving member 35 in a predetermined angular range. This dampens the variation of the transmission torque between the pulley 32 and the receiving member 35.

When the aforementioned sliding of the cylindrical surface 39a of each roller 39 along the sliding surface 43a of the corresponding engaging recess 43 is repeated, resistance to the sliding friction occurs between the surfaces 39a, 43a. This further effectively dampens the variation of the transmission torque. In other words, in addition to the dampening of the transmission torque variation through the elastic deformation of each elastic member 42, the resistance to the friction between each roller 39 and the corresponding engaging recess 43 dampens the transmission torque variation.

Each roller 39 slides along the sliding surface 43a of the corresponding engaging recess 43 while rolling on the same. Thus, for example, as compared to the structure in which each engaging pin 38 directly contacts the sliding surface 43a of the corresponding engaging recess 43, insufficient sliding performance due to static friction between the engaging pin 38 and the sliding surface 43a is suppressed. Further, the variation of the transmission torque reliably permits each engaging projection 39 to slide in the corresponding engaging recess 43. Accordingly, the aforementioned effect of dampening the transmission torque variation is further reliably obtained.

The sliding surface 43a of each corresponding engaging recess 43 is a curved concave surface. Thus, for example, as compared to the case in which each sliding surface 43a is a combination of flat surfaces each inclined at a different angle with respect to a circumferential direction of the pulley 32 (which remains within the scope and spirit of the present invention), the sliding surface 43a is easily configured to gradually vary its inclination angle with respect to the circumferential direction of the pulley 32. Further, the cylindrical surface 39a of each roller 39 smoothly slides along the sliding surface 43a. This allows the pulley 32 to smoothly rotate relative to the receiving member 35, thus effectively dampening the variation of the transmission torque.

Each engaging recess 43 is included in the hub 35b through the power transmitting arm 42 that functions as the elastic member. The elastic deformation of each power transmitting arm 42 permits the engaging recess 43 to change its position with respect to the hub 35b (deformation of the sliding surface 43a). In other words, each elastic member 42 is located in a power transmitting path and is used as a power transmitting member. This structure needs fewer power transmitting members, as compared to, for example, the case in which the elastic member is not located in the power transmitting path.

When the transmission torque varies, the contact position between the cylindrical surface 39a of each roller 39 and the sliding surface 43a of the corresponding engaging recess 43 repeatedly shifts in opposite directions along the sliding surface 43a. This varies the interval between the contact position and the fulcrum point with respect to which each power transmitting arm 42 deforms (the abutment position of the fulcrum portion 44 against the restricting ring 41). Thus, the elastic coefficient of the power transmitting arm 42 constantly changes. This suppresses vibration resonance in relative rotation between the pulley 32 and the receiving member 35 that is caused by the transmission torque variation.

Each power transmitting arm 42 is a plate spring, and bending the power transmitting arm 42 forms each engaging recess 43. The engaging recesses 43 are thus easily formed.

During the torque transmission, each power transmitting arm 42 elastically deforms (each engaging recess 43 changes its position) in the radial direction of the pulley 32. If the torque transmission is blocked, the power transmitting arm 42 rotates in the radial direction of the pulley 32. Thus, it is unnecessary to save space for deformation and rotation of each power transmitting arm 42 in the axial direction L. This minimizes the power transmission mechanism PT and the compressor with this power transmission mechanism PT in the axial direction L. Particularly, if the compressor is used in a vehicle air conditioner, it is undesirable to enlarge the compressor in the axial direction L rather than in the radial direction in terms of the shape of an engine compartment in which the compressor is installed. Accordingly, the power transmission mechanism PT of the first embodiment has a configuration that is preferred for use in the compressor of a vehicle air conditioner. Further, when each power transmitting arm 42 deforms, reactive force does not act in the axial direction L of the drive shaft 6. This suppresses generation of external force in the axial direction L that adversely affects the compressor.

The cover 45 encompasses the pulley 32. The space between the cover 45 and the pulley 32 accommodates the power transmitting members (the receiving member 35, the support pins 36, the engaging pins 38, the restricting ring 41, the power transmitting arms 42, and the like). The power transmitting members are thus protected from contamination by substance such as water or oil or dust in the engine compartment. This suppresses a decrease in durability due to the contamination of the power transmitting members. Further, for example, a foreign object is prevented from being caught between each roller 39 and the associated engaging pin 38 or the cylindrical surface 39a of the roller 39 and the sliding surface 43a of the corresponding engaging recess 43. This maintains smooth rolling of each roller 39.

Next, a second embodiment of the present invention will be described.

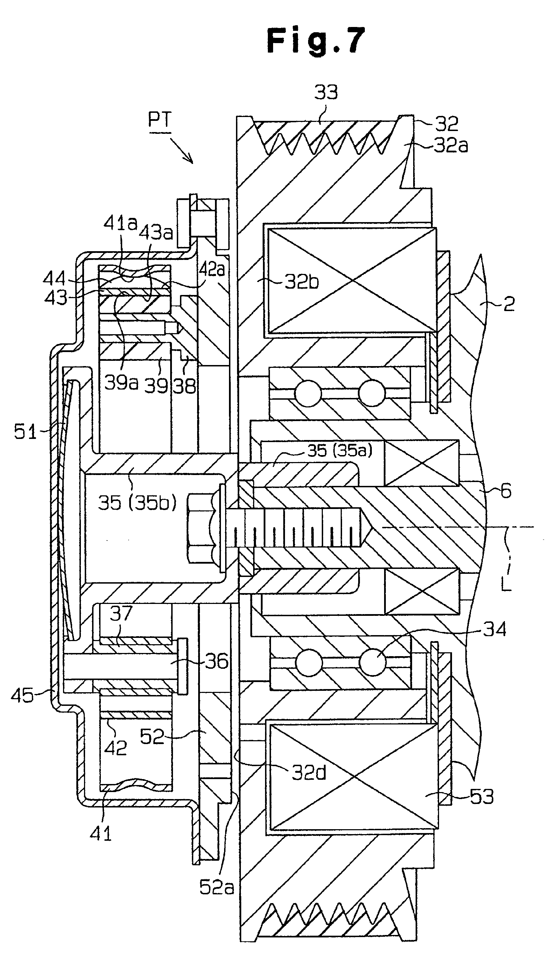

As shown in Fig. 7, in the second embodiment, the pulley 32 has an electromagnetic clutch mechanism that is capable of selectively permits and blocks power transmission in accordance with external electric controlling. That is, the hub 35b of the receiving member 35 supports the cover 45 through a plate spring 51. The cover 45 securely supports an armature 52 that is located between the pulley 32 and the restricting ring 41. The armature 52 securely supports the engaging pins 38. The restricting ring 41 does not engage with the pulley 32. The restricting ring 41 is fitted around the power transmitting arms 42 and is thus supported. A core 53 is located rearward from the pulley 32 in the front housing member 2.

When the core 53 is excited through external power supply, the pulley 32 attracts the armature 52 and the cover 45, together with the rollers 39 or the like, against the force of the plate spring 51. A clutch surface 52a of the armature 52 is thus pressed against a clutch surface 32d of the pulley 32. This permits power transmission between the pulley 32 and the engaging pins 38 (the rollers 39).

When the external power supply is nullified in this state to de-excite the core 53, the force of the plate spring 51 urges the armature 52 and the cover 45, together with the roller 39 or the like, away from the pulley 32. The clutch surfaces 32d, 52a thus separate from each other to block the power transmission between the pulley 32 and the engaging pins 38.

In this embodiment, the compressor can be stopped through external controlling when, for example, cooling is unnecessary. This reduces the power loss of the engine E.

The present invention may be embodied in the following forms without departing from the scope of the invention.

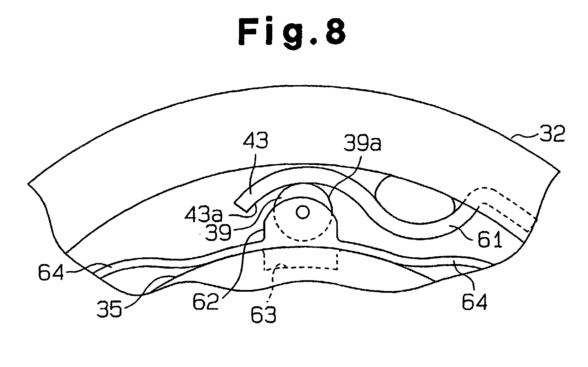

For example, as shown in Fig. 8, the pulley 32, or the second rotary body, may include power transmitting arms 61, or plate springs that each include the engaging recess 43. Further, the receiving member 35, or the first rotary body, includes the rollers 39. In the drawing, an engaging member 62 that rotationally supports each roller 39 is detachably attached to a connecting recess 63 of the receiving member 35. An urging spring 64 urges each engaging member 62 away from the receiving member 35. The engagement between each engaging member 62 and the receiving member 35 (the connecting recess 63) is maintained through the engagement between the corresponding roller 39 and the engaging recess 43. If the transmission torque between the pulley 32 and the receiving member 35 becomes excessive and each roller 39 falls from the corresponding engaging recess 43, the force of the urging spring 64 is released to separate the associated engaging member 62 from the corresponding connecting recess 63 of the receiving member 35. That is, when the transmission torque between the pulley 32 and the receiving member 35 is excessive, each roller 39 (each engaging member 62) separates from the pulley 32 and the receiving member 35. Thus, the power transmission between the pulley 32 and the receiving member 35 is reliably blocked.

The power transmitting path does not necessarily have to include an elastic member. In other words, in the illustrated embodiment, for example, each power transmitting arm 42 may be substantially rigid. Further, the restricting ring 41 is configured to elastically deform in a direction to increase its radius and a direction to decrease the same. Thus, even if each roller 39 engages with the corresponding engaging recess 43, each power transmitting arm 42 (each engaging recess 43) rotates around the associated support pin 36 in accordance with the transmission torque. This permits each engaging recess 43 to change its position with respect to the receiving member 35.

Each engaging pin 38 (each roller 39) may be located radially inward from each support pin 36 in the pulley 32. That is, the radial positions of each engaging pin 38 and the corresponding support pin 36 in the pulley 32 may be reversed from those of the illustrated embodiment.

In each power transmitting arm 42, a portion of the outer side 42a may be cut and bent to form the support portion 44 integrally with the power transmitting arm 42.

A ball may replace each roller 39 as the rolling component.

Each support pin 36 and each engaging pin 38 may project perpendicular to the axis L such that each power transmitting arm 42 may elastically deform in the axial direction L of the pulley 32 when torque transmission is permitted and rotates in the same direction when the torque transmission is blocked.

Instead of each engaging recess, an engaging projection may be configured to change its position with respect to the rotary body that supports the engaging projection. In other words, for example, the engaging recess 43 is fixedly formed in each engaging pin 38. Further, the roller 39 that engages with the engaging recess 43 in a projection-recess engagement manner is located at the distal portion of each power transmitting arm 42. In this case, the pulley 32 is the second rotary body, and the receiving member 35 is the first rotary body.

Each engaging recess 43 and each engaging projection 39 may be configured to change its position with respect to the rotary bodies 32, 35, respectively.

A spring may be located between each power transmitting arm 42 and the receiving member 35 for urging the power transmitting arm 42 in the radial inward direction of the pulley 32. The spring functions as the moving power applying means. The spring may be configured to, for example, urge the power transmitting arm 42 toward the drive shaft 6. Alternatively, the spring may be located between each support pin 36 and the associated sleeve 37 for urging the sleeve 37 to rotate. In these structures, if each roller 39 separates from the corresponding power transmitting arm 42, the power transmitting arm 42 may be rotated to a retreated position without contacting the roller 39. This reliably prevents noise or vibration from being otherwise caused by impact due to hitting of each power transmitting arm 42 and the corresponding roller 39.

The second embodiment may be modified such that the electromagnetic clutch structure is located between the receiving member 35 and the drive shaft 6.

Each power transmission mechanism of the illustrated embodiments does not necessarily have to be used for the power transmission between the engine E and the air-conditioner compressor. The power transmission mechanism may be used for power transmission between the engine E and an auxiliary device other than the air-conditioner compressor (for example, a hydraulic pump of a power steering device, a mechanical supercharger, and a radiator cooling fan). Further, application of the power transmission mechanism is not restricted to a power transmitting path of a vehicle. For example, the power transmission mechanism may be applied to a power transmitting path of a machine tool between a drive source and a machining device. In other words, the power transmission mechanism of the illustrated embodiments may be generally used in any power transmitting path.

## Claims

1. A power transmission mechanism comprising:
a first rotary body, wherein the first rotary body has an engaging projection;
a second rotary body, which is located coaxial with the first rotary body, wherein the second rotary body has an engaging recess;
the engaging projection engaging with the engaging recess to connect the first and second rotary bodies to each other such that power transmission is permitted;
at least one of the engaging projection and recess being configured to change its position with respect to the associated rotary body; and
an elastic member, wherein, during the power transmission between the first and second rotary bodies, the elastic member is elastically deformed by force generated by transmission torque for permitting at least one of the engaging projection and recess to change its position, thereby enabling the rotary bodies to rotate relative to each other in a predetermined angular range with the engaging projection sliding in the engaging recess;
wherein the power transmission mechanism is **characterized in that** the engaging projection is a rolling component rotationally supported by the first rotary body, and the rolling component slides in the engaging recess while rolling in the engaging recess in a contact state.

2. The power transmission mechanism according to claim 1, wherein the rolling component is a roller.

3. The power transmission mechanism according to claim 1 or 2, wherein a sliding surface of the engaging recess on which the engaging projection slides is a concave curved surface.

4. The power transmission mechanism according to any one of claims 1 to 3, wherein at least one of the engaging recess and projection changes its position in a radial direction of the associated rotary body for permitting sliding between the two engaging portions.

5. The power transmission mechanism according to any one of claims 1 to 4, wherein at least one of the engaging projection and recess is supported by the associated rotary body through the elastic member and is enabled to change its position with respect to the rotary body through the elastic deformation of the elastic member.

6. The power transmission mechanism according to claim 5, wherein the engaging recess is supported by the associated rotary body through the elastic member, the elastic member is a plate spring at least one end of which is secured to the rotary body, and the engaging recess is formed by bending the plate spring.

7. The power transmission mechanism according to any one of claims 1 to 6, wherein the elastic member changes its elastic coefficient in accordance with variation in a relative rotational angle between the rotary bodies.

8. The power transmission mechanism according to any one of claims 1 to 7, wherein the engaging projection separates from the engaging recess for blocking the power transmission between the first and second rotary bodies when the transmission torque becomes excessive.

9. The power transmission mechanism according to claim 8,
wherein at least one of the engaging projection and the engaging recess that changes its position with respect to the associated rotary body is located in a power transmitting arm rotationally supported by the rotary body, and, if the engaging projection separates from the engaging recess, the power transmitting arm receives moving force from a moving force applying means for rotating to a retreated position at which the power transmitting arm is not interfered by the other of the engaging recess and the engaging projection during the relative rotation of the first and second rotary bodies.

10. The power transmission mechanism according to any one of claims 1 to 9, wherein the first or second rotary body includes a clutch structure that is capable of selectively transmits and blocks power in accordance with external controlling.

11. The power transmission mechanism according to any one of claims 1 to 10, further comprising a cover, wherein the cover encompasses the engaging projection, the engaging recess, and the elastic member.

12. The power transmission mechanism according to claim 9, wherein the power transmitting arm is supported by the associated rotary body to rotate in a radial direction of the rotary body.

13. The power transmission mechanism according to claims 9 or 12, wherein the moving force applying means includes the other engaging portion, or the engaging projection or recess, and an external drive source that rotates this engaging portion relative to the power transmitting arm after the power transmission is blocked.

14. The power transmission mechanism according to any one of claims 1 to 13, wherein the rolling component is a ball.

15. A compressor including the power transmission mechanism according to any one of claims 1 to 14, wherein the power transmission mechanism is located in a power transmitting path between the compressor and an external drive source.
